# DEMANDE DE BREVET EUROPEEN

(11) **EP 2 818 840 A1**
(43) Date de publication de la demande: **31.12.2014**
(21) Numéro de dépôt: 14174583.6
(22) Date de dépôt: 26.06.2014
(51) Int. Cl.: G01K 7/42, G01W 1/10

(54) **Système de prédiction de température**

(30) Priorité: 28.06.2013 FR 1356314
(71) Demandeur: Probayes, 38330 Montbonnot-Saint-Martin (FR)
(72) Inventeur: Teypaz, Nicolas, 38330 Montbonmont-Saint-Martin (FR)
(74) Mandataire: Thibon, Laurent

(57) **Abrégé**

L'invention concerne un procédé de détermination d'une température (T) attendue localement à l'extérieur d'un bâtiment, comportant les étapes suivantes : collecter, d'un serveur (32) de fourniture de prévisions météorologiques, au moins une information de température prévue (Ti) dans la région géographique du bâtiment ; affecter, à la température prévue, un coefficient de pondération (αi) tenant compte d'une mesure locale de la température (Ts) à l'extérieur du bâtiment ; et en déduire la température attendue localement.

## Description

### Domaine

La présente description concerne de façon générale la régulation thermique et, plus particulièrement, un procédé et un système de prédiction de température et d'adaptation d'un plan de chauffe d'un bâtiment en fonction de données météorologiques.

### Exposé de l'art antérieur

On connaît de nombreux systèmes de régulation de chauffage qui prennent en compte diverses données de régulation parmi lesquelles la température intérieure du bâtiment et des informations issues de services météorologiques.

Par exemple, le document WO2007/061357 décrit un procédé de commande de la température d'un bâtiment qui prend en compte des caractéristiques techniques du bâtiment ainsi que des prévisions météorologiques pour déterminer la température équivalente du bâtiment et établir un plan de chauffe.

On connaît également des procédés visant à optimiser des prévisions météorologiques à l'aide de procédés multi-modèles prenant en compte des observations réelles à différents endroits du globe. Par exemple le document WO2006/024776 décrit un système de prévision climatique dans lequel des données de prévision d'ensemble sont exploitées pour fournir une prévision hybride sous forme de densités de probabilité en utilisant une combinaison d'au moins deux modèles.

Les systèmes existants sont souvent complexes à mettre en oeuvre, en particulier pour des systèmes hybrides multi-modèles. Par ailleurs, ils souffrent souvent d'un défaut de fiabilité, c'est-à-dire que les modèles ne sont pas adaptés à corriger des prévisions météorologiques afin d'optimiser le plan de chauffe d'un bâtiment en fonction de conditions locales.

### Résumé

Un mode de réalisation vise à proposer un procédé d'estimation de la température externe d'un bâtiment qui pallie tout ou partie des inconvénients des systèmes usuels.

Un autre mode de réalisation vise à proposer un système particulièrement adapté à obtenir un plan de chauffe local d'un bâtiment donné.

Un autre mode de réalisation vise à proposer un procédé particulièrement simple.

Pour atteindre tout ou partie de ces objets ainsi que d'autres, on prévoit un procédé de détermination d'une température attendue localement à l'extérieur d'un bâtiment, comportant les étapes suivantes :
collecter, d'un serveur de fourniture de prévisions météorologiques, au moins une information de température prévue dans la région géographique du bâtiment ;
affecter, à la température prévue, un coefficient de pondération tenant compte d'une mesure locale de la température à l'extérieur du bâtiment ;
en déduire la température attendue localement.

Selon un mode de réalisation :
des coefficients de pondération respectifs sont affectés à plusieurs températures prévues, fournies par plusieurs serveurs ; et
les températures prévues respectives, affectées de leurs coefficients de pondération respectifs sont sommées.

Selon un mode de réalisation, les contributions respectives des températures prévues, dans la détermination de la température attendue, tiennent en outre compte d'une constante, affectée à chaque température prévue, ajoutée au produit du coefficient par la température prévue.

Selon un mode de réalisation, les contributions respectives prises en compte pour la détermination d'une température à un instant donné, sont adaptées en fonction de températures mesurées à des instants précédents.

Selon un mode de réalisation, les instants précédents correspondent à la même heure lors de jours précédents.

Selon un mode de réalisation, le procédé prend en compte entre 3 et 5 serveurs de prévision météorologique.

Selon un mode de réalisation, ladite température prédite est utilisée pour déterminer un plan de chauffe du bâtiment.

Selon un mode de réalisation, on prévoit également un procédé de régulation d'un moyen de chauffage d'un bâtiment.

Selon un mode de réalisation, on prévoit également un système de régulation thermique d'un bâtiment, comportant un outil informatique programmé pour la mise en oeuvre du procédé selon l'une quelconque des revendications précédentes.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une représentation très schématique d'un mode de réalisation d'un système de détermination d'une température attendue au niveau d'un bâtiment et de détermination d'un plan de chauffe ;
la figure 2 illustre un exemple de fonctionnement du système de la figure 1 ; et
la figure 3 représente, sous forme de blocs, des étapes du procédé de détermination de la température au niveau d'un bâtiment.

### Description détaillée

De mêmes éléments ont été désignés par de mêmes références aux différentes figures. Par souci de clarté, seuls les étapes et éléments utiles à la compréhension des modes de réalisation qui vont être décrits ont été représentés et seront détaillés. En particulier, les dispositifs de chauffage ou de climatisation destinés à être commandés n'ont pas été détaillés, les modes de réalisation décrits étant compatibles avec l'utilisation de dispositifs existants. De plus, la détermination d'un plan de chauffe du bâtiment à partir d'une prévision de température obtenue par la mise en oeuvre du procédé décrit n'a pas non plus été détaillée, ces modes de réalisation étant compatibles avec les plans de chauffe usuels prenant en compte une température externe attendue pour un bâtiment donné.

Les inventeurs se sont aperçus qu'une des origines des erreurs des plans de chauffe provenait du fait que les systèmes existants de prévision climatique ne prenaient pas en compte la localisation du bâtiment de façon adaptée. En particulier, il arrive que des systèmes de prévision climatique prennent en compte des informations provenant de serveurs météorologiques (par exemple, via des sites internet) fournissant des prévisions de température générales et les adaptent par des systèmes multi-modèles complexes par rapport à des données issues de stations réparties sur le territoire. Toutefois, ces prévisions sont alors fournies en tant que prévisions de température d'une région donnée et ne sont pas optimales.

Les inventeurs prévoient de mettre en oeuvre un modèle d'estimation de la température extérieure locale au niveau même du bâtiment auquel est destiné le plan de chauffe.

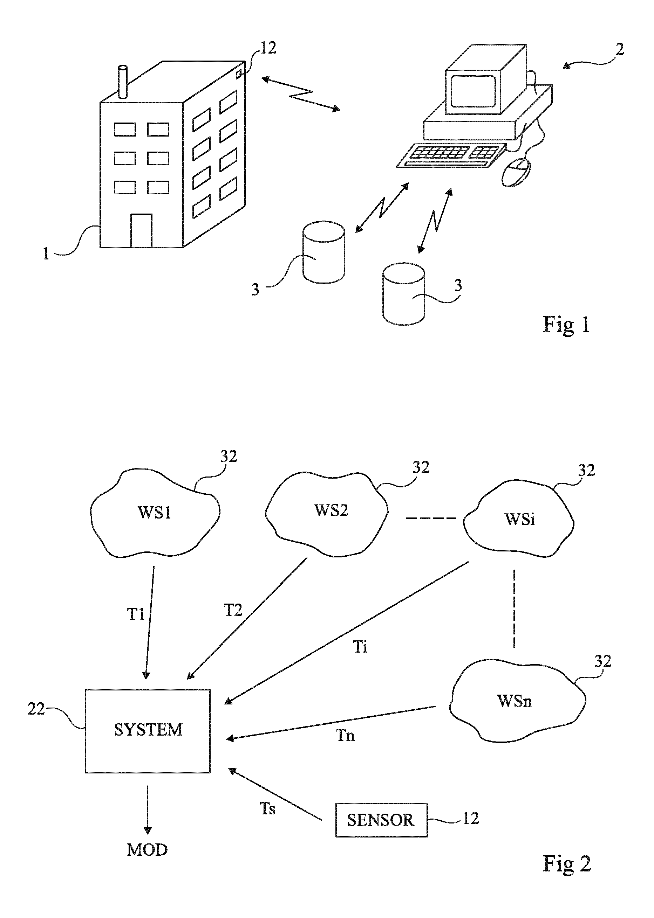

La figure 1 représente, de façon très schématique, un mode de réalisation d'un système de prévision d'une température extérieure au niveau d'un bâtiment 1.

Un tel système est basé sur l'utilisation d'un outil informatique 2, par exemple un micro-ordinateur, une tablette ou plus généralement tout outil informatique possédant des circuits de calcul et d'entrée/sortie adaptés. L'outil informatique 2 reçoit des informations relatives à la température attendue dans la zone géographique dans laquelle se trouve le bâtiment 1 depuis des serveurs 3 de fourniture de prévisions météorologiques, typiquement, des sites web fournissant des températures prévues. L'outil informatique 2 prend également en compte la température locale à l'extérieur du bâtiment 1 considéré, en recevant cette température d'un capteur 12 (SENSOR) placé à l'extérieur du bâtiment 1. Le cas échéant, plusieurs capteurs 12 sont utilisés autour du bâtiment et la température fournie à l'outil informatique 2 est une température moyenne.

La figure 2 illustre, de façon très schématique, un exemple de fonctionnement du système de la figure 1. Le système (bloc 22, SYSTEM) en pratique constitué de l'outil informatique 2 extrait différentes informations (données informatiques) de température T1, T2, ..., Ti, ..., Tn issues dans cet exemple de sites web 32 (WS1, WS2, ..., WSi, ..., WSn). Ces températures sont des températures affectées, par les systèmes de prédiction météorologique, à la zone géographique dans laquelle se trouve le bâtiment avec une précision qui dépend du site web. Le système 22 prend également en compte la température Ts fournie par le capteur 12. Sur la base des n températures Ti (i allant de 1 à n) fournies par les sites web 32 et de la température locale mesurée Ts, l'outil informatique établit un modèle MOD de prédiction de la température extérieure du bâtiment 1, capable de ne prendre en compte pour le futur que les informations des sites web.

En fait, la modélisation corrige les défauts de prédiction des systèmes de prévision météorologique au niveau local en adaptant, pour les déterminations ultérieures, le modèle à la température réelle mesurée. Ainsi, le système est auto-adaptatif. Au départ, on prévoit une procédure d'apprentissage pour établir une première version du modèle en comparant les températures prévues par le modèle aux températures réelles, pendant un certain temps.

De préférence, on établit un modèle qui prend en également en compte l'heure dans la journée (à la fois côté sites météorologiques et côté mesure réelle) soit directement en ajoutant une variable temporelle, soit indirectement en prévoyant autant de modèles que d'instants dans la journée où l'on souhaite une prédiction pour le plan de chauffe.

La granularité temporelle conditionne la précision du plan de chauffe. Les inventeurs considèrent qu'une granularité approximativement horaire constitue un bon compromis entre l'efficacité de la prévision et la simplicité du système.

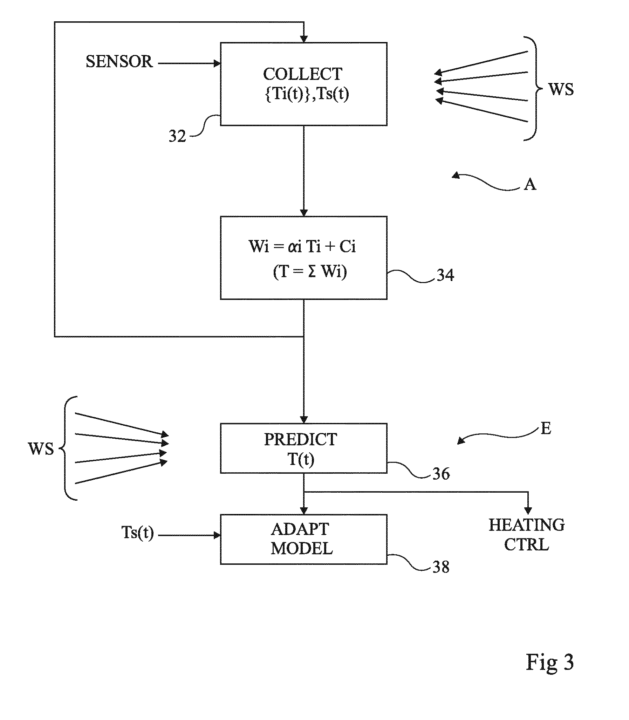

La figure 3 est une représentation schématique, sous forme de blocs, d'étapes d'un procédé de prédiction de la température T externe à un bâtiment, de préférence afin de commander un système de chauffage sous la forme d'un plan de chauffe.

Dans une première phase A d'apprentissage, le système collecte (bloc 32, COLLECT {Ti(t)}, Ts(t)), par exemple toutes les heures, les informations de température {Ti(t)} fournies par les n sites web WS pour la région dans laquelle se trouve le bâtiment 1, ainsi que la température locale Ts(t) mesurée par le capteur (SENSOR) au niveau du bâtiment. Le cas échéant, la collection des températures au niveau des sites web s'effectue de façon plus espacée, par exemple en fonction de la fréquence de la mise à jour des informations par le serveur météorologique (par exemple 3-4 fois par jour).

Pour chaque heure considérée, l'outil 2 calcule (bloc 34, Wi = αi.Ti + Ci, (T=∑Wi)) une contribution Wi de chaque site web sur la température locale prédite T en affectant, à la température Ti fournie par le site, un coefficient αᵢ de pondération. La température locale prédite T est alors donnée par la somme des contributions Wi. Le cas échéant, une constante Ci (qui peut donc être nulle) est prise en compte dans la contribution Wᵢ de chaque site. La température prédite T est alors comparée à la température réelle Ts afin d'affiner le modèle en adaptant les coefficients αi et les constantes Ci. Le modèle utilisé est résolu, par exemple, par programmation linéaire.

Les coefficients et constantes Ci sont, de préférence, fonction de l'heure afin de tenir compte du fait que les dérives ou imprécisions des températures fournies par les serveurs météorologiques peuvent varier en fonction de l'heure considérée.

La détermination (bloc 34) des contributions respectives s'effectue dans une phase d'apprentissage plus ou moins longue. A titre d'exemple particulier, les inventeurs considèrent qu'un examen sur une durée d'une à quelques semaines, (par exemple une quinzaine de jours) permet de démarrer une prédiction de façon acceptable.

Une fois la phase d'apprentissage initiale terminée, le système passe dans une phase d'exploitation E, dans laquelle le modèle est utilisé pour prédire (bloc 36, PREDICT T(t)) la température T(t) à un instant donné, typiquement à chaque heure de la journée. Dans cette étape de prédiction, le système collecte les informations de température provenant des différents sites web WS et applique les coefficients de pondération Wi du modèle pour obtenir la température T(t) sous la forme de la somme des contributions Wi.

La température prédite est mise à disposition d'un procédé d'établissement d'un plan de chauffe (HEATING CTRL). L'exploitation d'une température attendue pour la détermination du plan de chauffe est en elle-même usuelle. Par exemple, l'établissement du plan de chauffe peut prendre en compte, en plus de la température attendue, la luminosité à l'aide d'un capteur de luminosité locale au niveau du bâtiment et de multiples autres variables.

De préférence, plusieurs températures sont prédites pour différents instants futurs en fonction des informations disponibles au niveau des sites web et sont adaptées au fur et à mesure des mises à jour de ces informations. Par exemple, une première température est prédite un jour à l'avance, puis est ajustée une demi-journée, puis une heure avant.

Par ailleurs, le modèle (les coefficients αi et les constantes Ci) est ajusté pendant la phase d'exploitation E en l'adaptant (bloc 38 ADAPT MODEL) une fois que la température réelle Ts(t) est disponible (mesurée) pour l'instant considéré.

Plus l'historique de prise en compte des prédictions des sites web, dans la détermination et l'adaptation des coefficients αi et constantes Ci, est longue plus le modèle détermine de façon fiable la température attendue. Typiquement, les inventeurs considèrent que tenir compte d'un historique allant d'un à quelques mois, (de préférence de l'ordre de deux mois) suffit à obtenir une prédiction fiable.

Plus le nombre de sites web pris en compte est important, meilleure sera la prédiction. Toutefois, dans une réalisation simplifiée, un site web suffit. Par ailleurs, utiliser un trop grand nombre de sites web complique les calculs de façon pas nécessairement justifiée. Les inventeurs considèrent qu'en prenant en compte les prédictions de température fournies par un ordre de grandeur de 3 à 5 sites web permet une prédiction correcte.

On notera que le document WO2006/024773 fournit une prévision météorologique qui peut en soi être utilisée comme donnée d'entrée dans le système décrit ci-dessus comme étant, par exemple, la donnée fournie par un site web, qui est ensuite corrigée à l'aide du modèle décrit.

Quant au système décrit dans le document WO2007/061357, celui-ci peut être utilisé en tant que système d'exploitation de la température extérieure estimée par le modèle décrit dans la présente description.

Des modes de réalisation particuliers ont été décrits. Diverses variantes et modifications apparaîtront à l'homme de l'art. En particulier, bien que les modes de réalisation aient été décrits en relation avec des sites web, le modèle pourra également prendre en compte des températures provenant d'autres sources, par exemple des serveurs météorologiques auxquels le système serait directement connecté pour extraire des températures. De plus, les coefficients de pondération αi et les constantes Ci peuvent prendre en compte d'autres facteurs, par exemple la luminosité, pour distinguer des journées nuageuses de journées claires et en tenir compte dans le modèle. En outre, bien que les modes de réalisation ci-dessus aient été décrits en relation avec un outil informatique, plusieurs outils informatiques pourront être utilisés pour la mise en oeuvre de ces modes de réalisation, que ceux-ci soient au niveau du bâtiment sur lequel est établi le plan de chauffe ou à distance, par exemple dans des serveurs informatiques prenant en compte la localisation et recevant les différentes informations. Enfin, la mise en oeuvre pratique des modes de réalisation qui ont été décrits est à la portée de l'homme du métier à partir des indications fonctionnelles données ci-dessus en utilisant des outils et algorithmes de calcul en eux-mêmes usuels. En particulier, on pourra prévoir d'affecter des coefficients de pondération aux différentes mesures afin de tenir plus compte de mesures récentes que de mesures anciennes dans la détermination des coefficients.

## Revendications

1. Procédé de détermination d'une température (T) attendue localement à l'extérieur d'un bâtiment (1), comportant les étapes suivantes :
collecter, d'un serveur (3, 32) de fourniture de prévisions météorologiques, au moins une information de température prévue (Ti) dans la région géographique du bâtiment ;
affecter, à la température prévue, un coefficient de pondération (αi) tenant compte d'une mesure locale de la température (Ts) à l'extérieur du bâtiment ;
en déduire la température attendue localement.

2. Procédé selon la revendication 1, dans lequel :
des coefficients de pondération respectifs (αi) sont affectés à plusieurs températures prévues (Ti), fournies par plusieurs serveurs (3, 32) ; et
les températures prévues respectives, affectées de leurs coefficients de pondération respectifs sont sommées.

3. Procédé selon la revendication 2, dans lequel les contributions respectives (Wi) des températures prévues, dans la détermination de la température attendue (T), tiennent en outre compte d'une constante (Ci), affectée à chaque température prévue, ajoutée au produit du coefficient par la température prévue.

4. Procédé selon la revendication 3, dans lequel les contributions respectives (Wi) prises en compte pour la détermination d'une température à un instant donné (t), sont adaptées en fonction de températures mesurées à des instants précédents.

5. Procédé selon la revendication 4, dans lequel les instants précédents correspondent à la même heure lors de jours précédents.

6. Procédé selon l'une quelconque des revendications 1 à 5, prenant en compte entre 3 et 5 serveurs de prévision météorologique.

7. Procédé selon l'une quelconque des revendications 1 à 6, dans lequel ladite température prédite est utilisée pour déterminer un plan de chauffe du bâtiment (1).

8. Procédé de régulation d'un moyen de chauffage d'un bâtiment (1), prenant en compte la température attendue déterminée par le procédé selon l'une quelconque des revendications 1 à 7.

9. Système de régulation thermique d'un bâtiment (1), comportant un outil informatique programmé pour la mise en oeuvre du procédé selon l'une quelconque des revendications précédentes.
